# DEMANDE DE BREVET EUROPEEN

(11) **EP 3 650 379 A1**
(43) Date de publication de la demande: **13.05.2020**
(21) Numéro de dépôt: 19204449.3
(22) Date de dépôt: 21.10.2019
(51) Int. Cl.: B65G 47/51, B65G 61/00, B65G 17/12, B65G 1/127, B65G 57/03

(54) **SYSTÈME D ALIMENTATION D OBJETS À HAUTEUR VARIABLE POUR UN DISPOSITIF DE PALETTISATION ET DISPOSITIF DE PALETTISATION ÉQUIPÉ DUDIT SYSTÈME D ALIMENTATION**

(30) Priorité: 08.11.2018 FR 1860326
(71) Demandeur: Cetec Industrie Conditionnement, 24052 Périgueux (FR)
(72) Inventeur: LABRUE, Régis, 24000 PERIGUEUX (FR); GERBEAUD, Alain, 24600 VILLETOUREIX (FR)
(74) Mandataire: Fantin, Laurent

(57) **Abrégé**

L'invention a pour objet un système d'alimentation d'objets à hauteur variable pour un dispositif de palettisation qui comprend :
- une plate-forme fixe (26) sur laquelle est positionné au moins un objet (16),
- une plate-forme mobile (28) configurée pour recevoir au moins un objet (16) et pour se déplacer verticalement,
- au moins un plateau mobile (30) configuré pour suivre des trajectoires ascendante (T1) et descendante (T2) verticales telles que
∘ à un premier instant, le plateau mobile (30) est positionné à la même hauteur que la plate-forme fixe (26), permettant un transfert d'au moins un objet (16) présent sur la plate-forme fixe (26) vers le plateau mobile (30), et
∘ à un deuxième instant, le plateau mobile (30) est positionné à la même hauteur que la plate-forme mobile (28), permettant un transfert d'au moins un objet (16) présent sur le plateau mobile (30) vers la plate-forme mobile (28).

## Description

La présente demande se rapporte à un système d'alimentation d'objets à hauteur variable pour un dispositif de palettisation ainsi qu'à un dispositif de palettisation équipé dudit système d'alimentation. Un tel dispositif de palettisation permet de stocker des objets, comme des sacs par exemple, sur un support, comme une palette par exemple, couche par couche, selon un agencement donné.

Selon un premier mode de réalisation, un dispositif de palettisation comprend :
- un premier élévateur configuré pour supporter et descendre un support lors de son remplissage depuis une position haute de début de remplissage jusqu'à une position basse de fin de remplissage,
- un deuxième élévateur configuré pour supporter et monter un support vide depuis une première position correspondant approximativement à la position basse de fin de remplissage jusqu'à une deuxième position correspondant à la position haute de début de remplissage,
- un premier actionneur pour transférer un support vide depuis le deuxième élévateur jusqu'au premier élévateur,
- un système d'alimentation d'objets positionné en hauteur, sensiblement à la même hauteur que la position haute de début de remplissage, configuré pour alimenter le dispositif de palettisation objet par objet,
- une fausse palette, positionnée à une hauteur fixe au-dessus du premier élévateur, configurée pour supporter une à deux couches d'objets et s'ouvrir de manière à les poser sur un support vide supporté par le premier élévateur ou sur la dernière couche d'objets positionnés sur un support supporté par le premier élévateur,
- un deuxième actionneur permettant de saisir les objets depuis le système d'alimentation et les positionner sur la fausse palette selon un agencement donné.

Ce premier mode de réalisation n'est pas pleinement satisfaisant car il requiert deux élévateurs conduisant à un encombrement au sol important ainsi qu'un actionneur pour transférer les supports vides entre les deux élévateurs ce qui tend à augmenter les coûts et à complexifier le dispositif de palettisation. Selon un autre inconvénient, le premier élévateur doit être dimensionné de manière à pouvoir supporter un support totalement chargé de tous ou quasiment tous les objets ce qui conduit à complexifier et augmenter les coûts du dispositif de palettisation.

Selon un deuxième mode de réalisation décrit dans le document FR3040375, un dispositif de palettisation comprend un système d'alimentation de supports, positionné à une même hauteur que la position haute de début d'alimentation, configuré pour alimenter le dispositif de palettisation support par support ainsi qu'un unique actionneur de type bras articulé, configuré pour saisir soit un support soit un objet et le positionner sur la fausse palette.

Ce deuxième mode de réalisation permet de simplifier l'alimentation en support vide ce qui conduit à réduire les coûts et l'encombrement au sol.

Toutefois, le premier élévateur est identique à celui du premier mode de réalisation et doit être dimensionné de manière à pouvoir supporter un support totalement chargé de tous ou quasiment tous les objets ce qui conduit à complexifier et augmenter les coûts du dispositif de palettisation. De plus, l'unique actionneur est plus complexe dans la mesure où il doit pouvoir saisir des objets et des supports.

Pour remédier à cet inconvénient, selon un troisième mode de réalisation, un dispositif de palettisation comprend :
- Un système d'alimentation de supports vides positionné au sol,
- une zone de chargement au niveau de laquelle est positionné immobile un support en cours de remplissage,
- un élévateur configuré pour déplacer en hauteur une fausse palette afin de la positionner toujours légèrement au-dessus de la dernière couche posée sur le support ainsi qu'un actionneur de type bras articulé pour saisir des objets depuis un système d'alimentation d'objets et les poser sur la fausse palette selon un agencement donné,
- un système d'alimentation d'objets à hauteur variable.

Selon ce troisième mode de réalisation, le système d'alimentation d'objets se présente sous la forme d'un tapis incliné dont l'inclinaison augmente en cours de remplissage afin que les objets soient positionnés, à l'extrémité du tapis, à une hauteur sensiblement égale à la dernière couche déposée sur le support.

Selon ce troisième mode de réalisation, l'élévateur ne doit plus être dimensionné pour supporter un support durant son remplissage mais uniquement pour supporter une fausse palette, ce qui tend à le simplifier et à réduire les coûts du dispositif de palettisation.

Toutefois, un tel dispositif de palettisation n'est pas pleinement satisfaisant car le tapis incliné a une emprise au sol relativement importante et sa longueur doit évoluer en cours de remplissage afin que son extrémité soit toujours positionnée sensiblement à la même distance de la fausse palette. Le fait de devoir faire varier la longueur du tapis en fonction de son inclinaison tend à le complexifier et à augmenter le coût du système d'alimentation d'objets.

Les documents DE102016123780 et FR3031510 décrivent chacun un dispositif permettant de déplacer en hauteur des objets. Selon le document DE102016123780, un tel dispositif se présente sous la forme d'une roue comportant une pluralité de plateaux sur sa circonférence configurés pour supporter des objets. Selon le document FR3031510, un tel dispositif comprend un convoyeur présentant une trajectoire ascendante et une trajectoire descendante et comportant une pluralité de plateaux configurés pour supporter des objets. Selon ces deux modes de réalisation, les objets ont un mouvement continu si bien qu'il est difficile de les saisir par un actionneur.

La présente invention vise à remédier à tout ou partie des inconvénients de l'art antérieur.

A cet effet, l'invention a pour objet un système d'alimentation d'objets à hauteur variable pour un dispositif de palettisation qui comprend un actionneur permettant de saisir les objets pour les positionner sur un support. Selon l'invention, le système d'alimentation d'objets comprend une plate-forme fixe sur laquelle est positionné au moins un objet et au moins un plateau mobile configuré pour se déplacer au moins selon deux trajectoires ascendante et descendante verticales telles qu'à un premier instant le plateau mobile est positionné à la même hauteur que la plate-forme fixe, permettant un transfert d'au moins un objet présent sur la plate-forme fixe vers le plateau mobile, et en ce que le système d'alimentation d'objets comprend une plate-forme mobile configurée pour recevoir au moins un objet et pour se déplacer verticalement de manière à atteindre une position permettant à l'actionneur de saisir l'objet, les trajectoires ascendante et descendante verticales étant telles qu'à un deuxième instant le plateau mobile est positionné à la même hauteur que la plate-forme mobile, permettant un transfert d'au moins un objet présent sur le plateau mobile vers la plate-forme mobile.

Le fait de prévoir des trajectoires verticales pour le (ou les) plateau(x) mobile(s) permet d'obtenir un système d'alimentation d'objets compact. Grâce à la présence d'une plate-forme mobile, les objets sont immobiles lorsqu'ils sont saisis par l'actionneur du dispositif de palettisation.

Selon une autre caractéristique, les plates-formes fixe et mobile ainsi que chaque plateau mobile sont configurés de manière à ce que chaque plateau mobile puisse passer à travers chacune des plates-formes mobile et fixe.

Cette configuration permet d'obtenir un transfert des objets, depuis la plate-forme fixe vers un plateau mobile et depuis un plateau mobile vers la plate-forme mobile, et ce de manière automatique et autonome (sans aucun autre actionneur).

Selon une autre caractéristique, la plate-forme fixe est positionnée de manière à être traversée par chaque plateau mobile lors de la trajectoire ascendante et la plate-forme mobile est positionnée de manière à être traversée par chaque plateau mobile lors de la trajectoire descendante, les trajectoires ascendante et descendante ayant chacune une longueur telle que chaque plateau mobile puisse être positionné en dessous de la plate-forme fixe à un premier instant donné et au-dessus de la plate-forme mobile à un deuxième instant donné.

D'autres caractéristiques et avantages ressortiront de la description de l'invention qui va suivre, description donnée à titre d'exemple uniquement, en regard des dessins annexés parmi lesquels :
- Les figures 1A et 1B sont des représentations schématiques d'un dispositif de palettisation à différentes hauteurs de remplissage qui illustrent un mode de réalisation de l'invention,
- Les figures 2A et 2B sont des représentations schématiques d'un système d'alimentation d'objets à différentes hauteur d'alimentation qui illustrent un mode de réalisation de l'invention,
- La figure 3 est une vue en perspective d'un dispositif de palettisation qui illustre un mode de réalisation de l'invention, et
- La figure 4 est une vue en perspective d'un système d'alimentation d'objets qui illustre un mode de réalisation de l'invention.

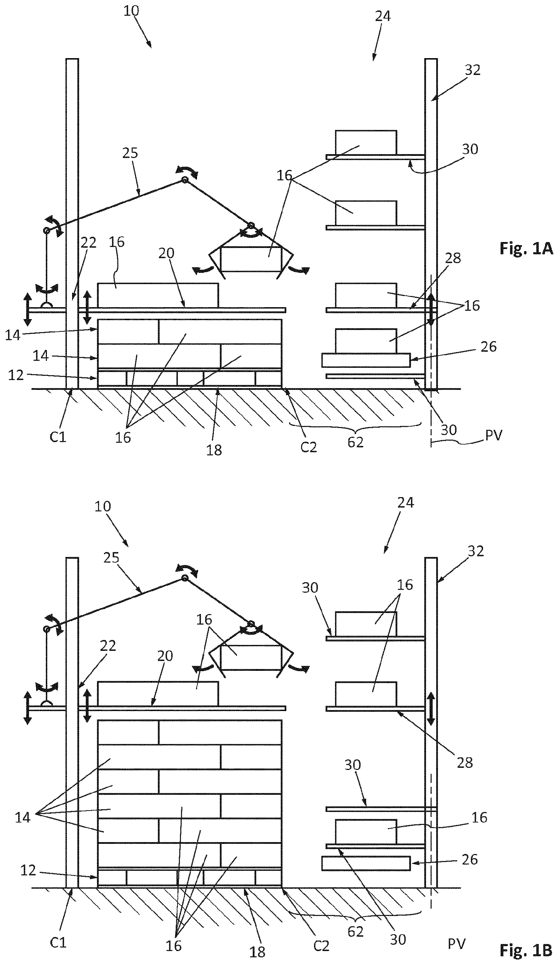

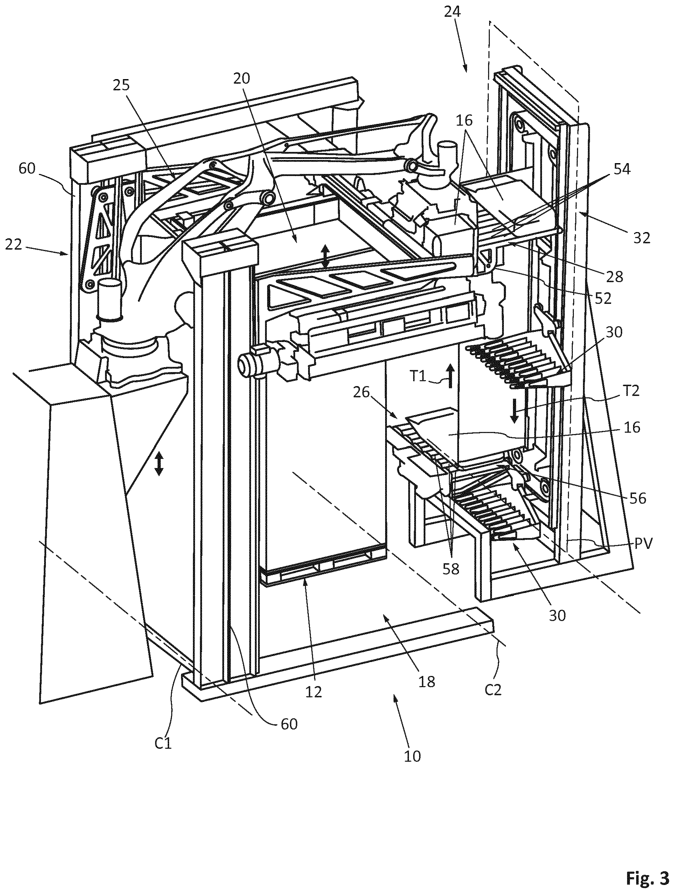

Sur les figures 1A, 1B et 3, on a représenté en 10 un dispositif de palettisation permettant le stockage sur un support 12, selon plusieurs couches 14 superposées, des objets 16 agencés selon un agencement donné pour chacune des couches. A titre d'exemple, le support 12 supporte deux couches 14 à un premier instant de chargement visible sur la figure 1A et six couches à un deuxième instant de chargement visible sur la figure 1B.

Selon une configuration, le support 12 est une palette et les objets 16 sont des sacs. Cependant, l'invention n'est pas limitée à ce type de support ou à ce type d'objets.

Le dispositif de palettisation 10 comprend
- une zone de chargement 18 au niveau de laquelle est positionné un support 12 à charger d'objets 16,
- un système d'alimentation de supports vides,
- un système d'évacuation des supports chargés,
- une fausse palette 20, positionnée à l'aplomb de la zone de chargement 18, mobile en hauteur entre une première position correspondant à une hauteur basse de début de chargement et une deuxième position correspondant à une hauteur haute de fin de chargement,
- un élévateur 22 configuré pour déplacer la fausse palette 20 verticalement, en fonction du chargement du support 12 en objets 16, de sorte à positionner la fausse palette 20 juste au-dessus du support 12 lorsque ce dernier est vide, ou juste au-dessus de la dernière couche 14 déposée sur le support 12,
- un système d'alimentation d'objets 24 configuré pour alimenter le dispositif d'alimentation 10 en objets, un par un, à hauteur variable en fonction de la hauteur de chargement du support 12,
- un actionneur 25, de type bras articulé, configuré pour saisir les objets 16 et les déposer sur la fausse palette 20 selon un agencement donné.

En complément de la fausse palette 20, le dispositif de palettisation peut comprendre au moins un système de centrage configuré pour centrer un support sur la zone de chargement, une couche d'objets positionnée sur la fausse palette 20 ou juste positionnée sur le support 12, un système de déplacement de l'actionneur 25 selon une direction verticale afin de le positionner en fonction de la hauteur de la fausse palette 20, un système de banderolage. En variante, le système de palettisation ne comprend pas de fausse palette 20, les objets étant directement déposés sur la dernière couche d'objets positionnée sur le support 12.

La zone de chargement 18, le système d'alimentation en supports, le système d'évacuation des supports chargés, la fausse palette 20, l'élévateur 22, l'actionneur 25 ainsi que son système de déplacement, le (ou les) système(s) de centrage ne sont pas plus décrits car ils peuvent être identiques à ceux du troisième mode de réalisation de l'art antérieur.

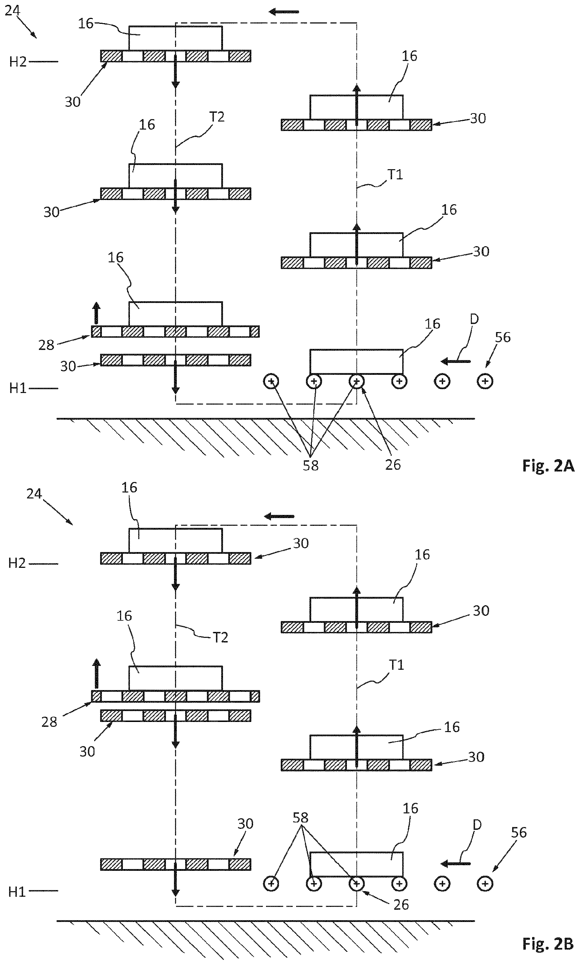

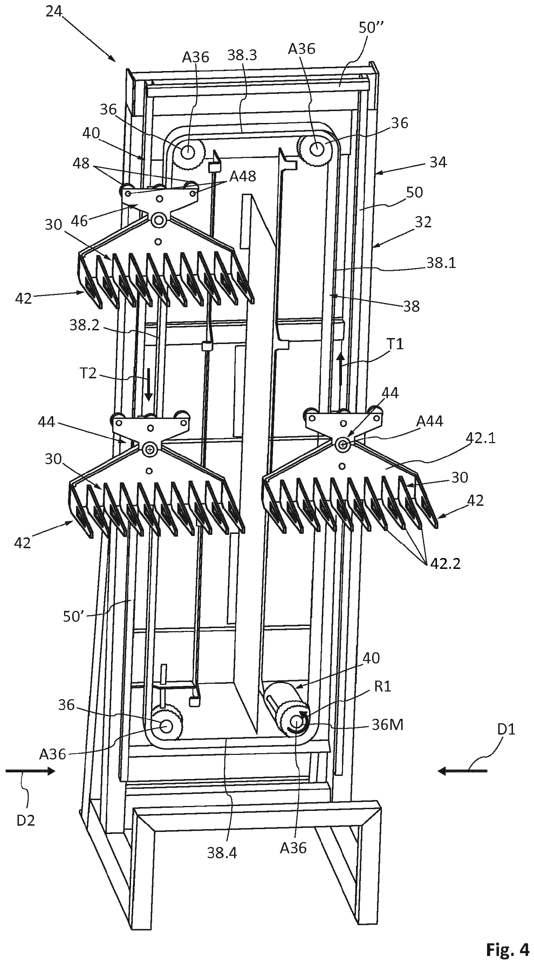

Comme illustré sur les figures 2A, 2B et 4, le système d'alimentation d'objets 24 est configuré pour permettre de positionner les objets à une hauteur d'alimentation variable entre une première hauteur H1 dite hauteur basse et une deuxième hauteur H2 dite hauteur haute, ladite hauteur d'alimentation variant entre les première et deuxième hauteurs H1, H2 en fonction de la hauteur de chargement du support 12 dans la zone de chargement 18.

Selon une configuration, la hauteur d'alimentation est sensiblement à la même hauteur que la fausse palette 20, la première hauteur H1 correspondant à la hauteur de la fausse palette 20 lors de la réalisation de la première couche posée sur le support 12 et la deuxième hauteur H2 correspondant à la hauteur de la fausse palette 20 lors de la réalisation la dernière couche déposée sur le support 12.

Selon une caractéristique de l'invention, le système d'alimentation d'objets 24 comprend :
- une plate-forme fixe 26 sur laquelle est positionné au moins un objet 16 à déposer sur le support 12,
- une plate-forme mobile 28 configurée pour recevoir au moins un objet 16 et pour se déplacer verticalement de manière à atteindre une position permettant à l'actionneur 25 de saisir l'objet 16,
- au moins un plateau 30 mobile au moins selon des trajectoires ascendante et descendante verticales T1, T2 telle qu'à un premier instant le plateau mobile 30 est positionné à la même hauteur que la plate-forme fixe 26, permettant un transfert d'au moins un objet 16 présent sur la plate-forme fixe 26 vers le plateau mobile 30 ; et qu'à un deuxième instant le plateau mobile 30 est positionné à la même hauteur que la plate-forme mobile 28, permettant un transfert d'au moins un objet 16 présent sur le plateau mobile 30 vers la plate-forme mobile 28.

Ainsi, un objet 16 présent sur la plate-forme fixe 26 est transféré sur un plateau mobile 30 qui l'achemine jusqu'à la plate-forme mobile 28. L'objet 16 positionné sur la plate-forme mobile 28 peut être saisi par l'actionneur 25 et déposé sur la fausse palette 20 selon un agencement donné.

Selon une autre caractéristique de l'invention, les plates-formes fixe et mobile 26, 28 ainsi que chaque plateau mobile 30 sont configurés de manière à ce que chaque plateau mobile 30 puisse passer à travers chacune des plates-formes mobile et fixe 26, 28 pour que chacun des objets 16 soit transféré automatiquement et de façon autonome (sans actionneur) depuis la plate-forme fixe 26 vers un plateau mobile 30 et depuis un plateau mobile 30 vers la plate-forme mobile 28.

En complément, chaque plateau mobile 30 est configuré pour suivre une trajectoire ascendante T1 et une trajectoire descendante T2, la plate-forme fixe 26 étant positionnée de manière à être traversée par chaque plateau mobile 30 lors de la trajectoire ascendante T1, la plate-forme mobile 28 étant positionnée de manière à être traversée par chaque plateau mobile 30 lors de la trajectoire descendante T2. Les trajectoires ascendante et descendante T1, T2 sont parallèles. Elles ont chacune une longueur telle que chaque plateau mobile 30 puisse être positionné en dessous de la plate-forme fixe 26 à un premier instant donné et au-dessus de la plate-forme mobile 28 à un deuxième instant donné.

Ainsi, dans un premier temps, un plateau mobile 30 est positionné sous la plate-forme fixe 26 sur laquelle est positionné au moins un objet 16. Lors de sa trajectoire ascendante T1, le plateau mobile 30 va passer à travers la plate-forme fixe 26. A cet instant, de manière automatique et autonome, l'objet 16 présent sur la plate-forme fixe 26 va être positionné au-dessus du plateau mobile 30. Lorsque le plateau mobile 30 va commencer la trajectoire descendante T2, il va être positionné au-dessus de la plate-forme mobile 28. En passant à travers la plate-forme mobile 28, l'objet 16 présent sur le plateau mobile 30 va rester au-dessus de la plate-forme mobile 28.

Selon un mode de réalisation visible sur la figure 4, le système d'alimentation en objets 24 comprend plusieurs plateaux mobiles 30 ainsi qu'un convoyeur à plateaux 32.

Ce convoyeur à plateaux 32 comprend un châssis 34 vertical, quatre pignons ou roues 36 supportés par le châssis 34, ayant des axes de pivotement A36 parallèles entre eux et horizontaux, ainsi qu'une courroie ou chaîne 38, à laquelle sont reliés les plateaux mobiles 30, guidée par les quatre pignons ou roues 36. Les pignons ou roues 36 sont positionnés aux sommets d'un rectangle vertical de manière à ce que la courroie ou chaîne 38 présente deux brins verticaux 38.1 et 38.2 correspondant respectivement aux trajectoires ascendante et descendante T1 et T2. La courroie ou chaîne 38 comprend également un brin horizontal supérieur 38.3 et un brin horizontal inférieur 38.4.

Au moins l'un(e) des pignons ou roues 36M est accouplé(e) à une motorisation 40 pour générer le défilement de la courroie ou chaîne 38 selon au moins un sens de défilement.

Selon une configuration, la motorisation 40 est réversible pour générer le défilement de la courroie ou chaîne (38) selon deux sens de défilement opposés, le pignon ou la roue 36M pouvant être entraîné(e) en rotation selon un premier sens de rotation R1 ou selon un deuxième sens de rotation (opposé au premier sens de rotation R1).

Dans le premier sens de rotation R1, le premier brin 38.1 (à droite sur la figure 4) présente un mouvement ascendant correspondant à la trajectoire ascendante T1 et le deuxième brin 38.2 (à gauche sur la figure 4) présente un mouvement descendant correspondant à la trajectoire descendante T2.

Le convoyeur à plateaux 32 comprend également un système de guidage 40 permettant de conserver l'orientation des plateaux mobiles 30 inchangée, qu'ils soient positionnés au niveau d'un brin vertical ou horizontal.

Selon un mode de réalisation, chaque plateau mobile 30 comprend une fourche 42 qui présente une plaque verticale 42.1 et plusieurs dents horizontales 42.2 reliées à la plaque verticale 42.1, les dents 42.2 étant espacées entre elles de manière à traverser chacune des plates-formes fixe et mobile 26, 28. Quel que soit son mode de réalisation, la fourche 42 est configurée pour supporter au moins un objet 16 et pour traverser chacune des plates-formes fixe et mobile 26, 28.

La fourche 42 est reliée à la courroie ou chaîne 38 par une liaison 44 pivotante permettant à la fourche de pouvoir pivoter par rapport à la courroie ou chaîne 38 selon un axe de pivotement A44 horizontal. Cet agencement permet de conserver l'orientation du plateau mobile 30 inchangée.

Le système de guidage 40 comprend, au niveau de chaque plateau mobile 30, une tête de guidage 46, reliée à la fourche 42, qui supporte au moins deux galets 48 configurés pour pivoter chacun selon des axes de pivotement A48 horizontaux ainsi qu'au moins un rail de guidage 50, solidaire du châssis 34, contre lequel (ou lesquelles) peuvent rouler les galets 48.

Selon un mode de réalisation visible sur la figure 4, le système de guidage 40 comprend deux rails de guidage verticaux 50, 50' parallèles aux premier et deuxième brins 38.1, 38.2 de la courroie ou chaîne 38, positionnés à l'extérieur des premier et deuxième brins 38.1, 38.2, ainsi qu'un rail de guidage horizontal 50", parallèle au brin horizontal supérieur 38.3, positionné au-dessus de ce dernier. Pour chaque plateau mobile 30, la liaison 44 pivotante entre la fourche 42 et la courroie ou chaîne 38, la tête de guidage 46, ses galets 48 ainsi que les rails de guidage 50, 50', 50" sont agencés de manière à ce qu'un galet 48 soit en contact avec l'un des rails de guidage verticaux 50, 50' lorsque le plateau mobile 30 est situé au niveau de l'un des premier et deuxième brins 38.1, 38.2 et qu'au moins deux galets 48 soient en contact avec le rail de guidage horizontal 50" lorsque le plateau mobile 30 est situé au niveau du brin horizontal supérieur 38.3. Cet agencement permet d'éviter le basculement du plateau mobile 30 entre les trajectoires ascendante et descendante T1, T2 et la chute des objets 16 supportés par la fourche 42. Bien entendu, l'invention n'est pas limitée à ce mode de réalisation pour le système de guidage 40. Quel que soit son mode de réalisation, le système de guidage 40 est configuré pour éviter la chute des objets 16 supportés par les plateaux mobiles 30, notamment lors du changement de trajectoire entre les trajectoires ascendante et descendante T1, T2.

Selon un mode de réalisation visible sur la figure 3, la plate-forme mobile 28 comprend un châssis 52 et plusieurs barres 54, supportées par le châssis 52, parallèles entre elles et espacées de manière à permettre le passage de la fourche 42 de chaque plateau mobile 30. Selon une première variante, la plate-forme mobile 28 comprend un élévateur qui lui est propre et lui permet de se déplacer verticalement. Selon une autre variante, le même élévateur 22 assure le mouvement vertical de la fausse palette 20 et de la plate-forme mobile 28. Bien entendu, l'invention n'est pas limitée à ce mode de réalisation pour la plate-forme mobile 28. Quel que soit son mode de réalisation, la plate-forme mobile 28 est configurée pour supporter au moins un objet 16 et pour permettre le passage de la fourche 42 de chaque plateau mobile 30.

Selon un mode de réalisation visible sur les figures 2A, 2B et 3, la plate-forme fixe 26 est une portion d'un convoyeur à rouleaux 56 dont les rouleaux 58 sont orientés et espacés de sorte à permettre le passage de la fourche 42 de chaque plateau mobile 30. Le convoyeur à rouleaux 56 est configuré pour acheminer les objets 16 selon une direction de déplacement D, un par un, au niveau de la plate-forme fixe 26.

Le fait de prévoir une motorisation 40 réversible permet, à partir du même système d'alimentation d'objets 24, de pouvoir proposer deux configurations différentes. Une première configuration pour laquelle le convoyeur à rouleaux 56 est positionné d'un premier côté du convoyeur à plateaux 32 et déplace les objets 16 selon un premier sens de déplacement D1 (visible sur la figure 4) ainsi qu'une deuxième configuration pour laquelle le convoyeur à rouleaux 56 est positionné d'un deuxième côté du convoyeur à plateaux 32 (opposé au premier côté) et déplace les objets 16 selon un deuxième sens de déplacement D2 (opposé au premier sens).

Bien entendu, l'invention n'est pas limitée à ce mode de réalisation pour la plate-forme fixe 26. Quel que soit son mode de réalisation, la plate-forme fixe 26 est configurée pour supporter au moins un objet 16 et pour permettre le passage de la fourche 42 de chaque plateau mobile 30.

Quel que soit le mode de réalisation, la plate-forme fixe 26 est positionnée de manière à être décalée vers le haut par rapport au départ de la trajectoire ascendante T1 afin que chaque plateau mobile 30 soit positionné sous la plate-forme fixe 26 à un instant donné. De plus, la course de la plate-forme mobile 28 est telle que l'extrémité supérieure de cette course soit décalée vers le bas par rapport au point de départ de la trajectoire descendante T2 et que l'extrémité inférieure de cette course soit décalée vers le haut par rapport au point d'arrivée de la trajectoire descendante T2 de manière à ce que chaque plateau mobile 30 soit positionné au-dessus de la plate-forme mobile 28 lorsqu'il est au départ de la trajectoire descendante T2 et positionné au-dessous de la plate-forme mobile 28 lorsqu'il est à l'arrivée de la trajectoire descendante T2.

Selon un mode de fonctionnement, le convoyeur à plateaux 32 présente un fonctionnement continu de manière à ce que les plateaux mobiles 30 se déplacent de manière continue. Le nombre de plateaux mobiles 30 et leur vitesse de déplacement sont ajustés en fonction de la cadence d'alimentation souhaitée.

Selon une configuration, la zone de chargement 18 présente une emprise au sol sous la forme d'un quadrilatère (carré ou rectangle). La fausse palette 20 peut se déplacer selon deux montants 60 positionnés à chacune des extrémités d'un premier côté C1 de la zone de chargement 18. L'actionneur 24 est positionné au niveau de ce premier côté C1. Les trajectoires ascendante et descendante T1, T2 sont positionnées dans un plan vertical PV sensiblement parallèle à un deuxième côté C2 de la zone de chargement 18 (opposé au premier côté C1). Ce plan PV est distant, du deuxième côté C2 de la zone de chargement 18, d'une zone d'espacement 62 au niveau de laquelle sont positionnés les plates-formes fixe et mobile 26, 28 et les plateaux mobiles 30.

Le principe de fonctionnement est maintenant décrit.

Le convoyeur à rouleaux 56 positionne tour à tour un objet au niveau de la plate-forme fixe 26. Le plateau mobile 30 situé en amont de la plate-forme fixe 26 va être positionné sous la plate-forme fixe 26 au départ de la trajectoire ascendante T1 et monté en suivant cette trajectoire ascendante T1. Durant cette ascension, le plateau mobile 30 va traverser la plate-forme fixe 26. L'objet 16 présent sur la plate-forme fixe 26 va automatiquement et de manière autonome être positionné au-dessus du plateau mobile 30 et supporté par ce dernier. Le plateau mobile 30 va, en supportant l'objet 16, poursuive la trajectoire ascendante T1 puis suivre une trajectoire horizontale et enfin atteindre le départ de la trajectoire descendante T2. Lors de cette trajectoire descendante T2, le plateau mobile 30 va traverser la plate-forme mobile 28 quelle que soit la position en hauteur de ladite plate-forme mobile 28. L'objet 16 supporté par le plateau mobile 30 va automatiquement et de manière autonome rester sur la plate-forme mobile 26. Dès lors, l'actionneur 25 peut le saisir et le positionner sur la fausse palette 20.

Les différents plateaux mobiles 30 du convoyeur à plateaux 32 vont, chacun à leur tour, prendre un objet 16 présent sur la plate-forme fixe 26, les acheminer vers la plate-forme mobile 28 et les y déposer, la position en hauteur de la plate-forme mobile 28 évoluant en cours de chargement du support 12, la plate-forme mobile 28 étant proche de l'arrivée de la trajectoire descendante T2 en début de chargement et proche du départ de la trajectoire descendante T2 en fin de chargement du support.

Le système d'alimentation d'objets 24 selon l'invention permet d'obtenir une alimentation en objets à hauteur variable avec une emprise au sol limitée.

## Revendications

1. Système d'alimentation d'objets à hauteur variable pour un dispositif de palettisation qui comprend un actionneur (25) permettant de saisir les objets (16) pour les positionner sur un support (12), **caractérisé en ce que** le système d'alimentation d'objets comprend une plate-forme fixe (26) sur laquelle est positionné au moins un objet (16) et au moins un plateau mobile (30) configuré pour se déplacer au moins selon des trajectoires ascendante et descendantes verticales (T1, T2) telles qu'à un premier instant le plateau mobile (30) est positionné à la même hauteur que la plate-forme fixe (26), permettant un transfert d'au moins un objet (16) présent sur la plate-forme fixe (26) vers le plateau mobile (30) et **en ce que** le système d'alimentation d'objets comprend une plate-forme mobile (28) configurée pour recevoir au moins un objet (16) et pour se déplacer verticalement de manière à atteindre une position permettant à l'actionneur (25) de saisir l'objet (16), les trajectoires ascendante et descendante verticales (T1, T2) étant telles qu'à un deuxième instant, le plateau mobile (30) est positionné à la même hauteur que la plate-forme mobile (28), permettant un transfert d'au moins un objet (16) présent sur le plateau mobile (30) vers la plate-forme mobile (28).

2. Système d'alimentation d'objets à hauteur variable selon la revendication précédente, **caractérisé en ce que** les plates-formes fixe et mobile (26, 28) ainsi que chaque plateau mobile (30) sont configurés de manière à ce que chaque plateau mobile (30) puisse passer à travers chacune des plates-formes mobile et fixe (26, 28)

3. Système d'alimentation d'objets à hauteur variable selon la revendication précédente, **caractérisé en ce que** la plate-forme fixe (26) est positionnée de manière à être traversée par chaque plateau mobile (30) lors de la trajectoire ascendante (T1) et la plate-forme mobile (28) est positionnée de manière à être traversée par chaque plateau mobile (30) lors de la trajectoire descendante (T2), les trajectoires ascendante et descendante (T1, T2) ayant chacune une longueur telle que chaque plateau mobile (30) puisse être positionné en dessous de la plate-forme fixe (26) à un premier instant donné et au-dessus de la plate-forme mobile (28) à un deuxième instant donné.

4. Système d'alimentation d'objets à hauteur variable selon la revendication précédente, **caractérisé en ce qu'**il comprend plusieurs plateaux mobiles (30) ainsi qu'un convoyeur à plateaux (32) qui présente un châssis (34) vertical, quatre pignons ou roues (36), supporté(e)s par le châssis (34), ayant des axes de pivotement (A36) parallèles entre eux et horizontaux, ainsi qu'une courroie ou chaîne (38), à laquelle sont reliés les plateaux mobiles (30), guidée par les quatre pignons ou roues (36), les pignons ou roues (36) étant positionné(e)s aux sommets d'un rectangle vertical de manière à ce que la courroie ou chaîne (38) présente deux brins verticaux (38.1, 38.2) correspondant respectivement aux trajectoires ascendante et descendante (T1, T2) ainsi qu'un brin horizontal supérieur (38.3) et un brin horizontal inférieur (38.4).

5. Système d'alimentation d'objets à hauteur variable selon la revendication précédente, **caractérisé en ce que** le convoyeur à plateaux (32) comprend également un système de guidage (40) permettant de conserver l'orientation des plateaux mobiles (30) inchangée, qu'ils soient positionnés au niveau d'un brin vertical ou horizontal.

6. Système d'alimentation d'objets à hauteur variable selon la revendication précédente, **caractérisé en ce que** chaque plateau mobile (30) comprend une fourche (42) reliée à la courroie ou chaîne (38) par une liaison (44) pivotante permettant à la fourche de pouvoir pivoter par rapport à la courroie ou chaîne (38) selon un axe de pivotement (A44) horizontal.

7. Système d'alimentation d'objets à hauteur variable selon la revendication précédente, **caractérisé en ce que** le système de guidage (40) comprend, au niveau de chaque plateau mobile (30) une tête de guidage (46) reliée à la fourche (42) qui supporte au moins deux galets (48), configurés pour pivoter chacun selon des axes de pivotement (A48) horizontaux ainsi qu'au moins un rail de guidage (50) solidaire du châssis (34) contre lequel (ou lesquelles) peuvent rouler les galets (48).

8. Système d'alimentation d'objets à hauteur variable selon la revendication précédente, **caractérisé en ce que** le système de guidage (40) comprend deux rails de guidage verticaux (50, 50') parallèles aux premier et deuxième brins (38.1, 38.2) de la courroie ou chaîne (38) ainsi qu'un rail de guidage horizontal (50"), parallèle au brin horizontal supérieur (38.3).

9. Système d'alimentation d'objets à hauteur variable selon l'une des revendications 4 à 8, **caractérisé en ce qu'**au moins l'un(e) des pignons ou roues (36M) est accouplé(e) à une motorisation (40) réversible pour générer le défilement de la courroie ou chaîne (38) selon deux sens de défilement opposés.

10. Dispositif de palettisation comprenant un système d'alimentation d'objets à hauteur variable selon l'une des revendications précédentes.
